# EUROPEAN PATENT APPLICATION

(11) **EP 3 358 872 A1**
(43) Date of publication of application: **08.08.2018**
(21) Application number: 18154900.7
(22) Date of filing: 02.02.2018
(51) Int. Cl.: H04W 8/22, H04W 28/06, H04W 36/00

(54) **DEVICE AND METHOD FOR HANDLING NEW RADIO CAPABILITIES**

(30) Priority: 03.02.2017 US 201762454063 P; 28.09.2017 US 201762565054 P; 31.10.2017 US 201762579161 P
(71) Applicant: HTC Corporation, Taoyuan City 330, (TW)
(72) Inventor: WU, Chih-Hsiang, 330, Taoyuan District, Taoyuan City (TW)
(74) Representative: Klang, Alexander H.

(57) **Abstract**

A communication device for handling NR capabilities comprises a storage device for storing instructions and a processing circuit coupled to the storage device. The processing circuit is configured to execute the instructions stored in the storage device. The instructions comprise receiving a first UECapabilityEnquiry message from a first base station (BS), when connecting to the first BS, wherein the first UECapabilityEnquiry message comprises a first indicator indicating the communication device to transmit a first part of a plurality of NR capabilities of the communication device; and transmitting the first part of the plurality of NR capabilities of the communication device to the first BS, in response to the first indicator.

## Description

### Cross Reference To Related Applications

This application claims the benefit of U.S. Provisional Applications No. 62/454,063 filed on Feb. 3, 2017, No. 62/565,054 filed on Sep. 28, 2017 and No. 62/579,161 on Oct. 31, 2017, which are incorporated herein by reference.

### Background of the Invention

### 1. Field of the Invention

The present invention relates to a device and a method used in a wireless communication system, and more particularly, to a device and a method of handling new radio (NR) capabilities in a wireless communication system.

### 2. Description of the Prior Art

A user equipment (UE) may support fifth generation (5G) communication (or called new radio, NR). It is not known how to transmit NR capabilities in a network other than a NR network.

### Summary of the Invention

The present invention therefore provides a communication device for handling NR capabilities to solve the abovementioned problem.

A communication device for handling NR capabilities comprises a storage device for storing instructions and a processing circuit coupled to the storage device. The processing circuit is configured to execute the instructions stored in the storage device. The instructions comprise receiving a first UECapabilityEnquiry message from a first base station (BS), when connecting to the first BS, wherein the first UECapabilityEnquiry message comprises a first indicator indicating the communication device to transmit a first part of a plurality of NR capabilities of the communication device; and transmitting the first part of the plurality of NR capabilities of the communication device to the first BS, in response to the first indicator.

A first BS for handling NR capabilities comprises a storage device for storing instructions and a processing circuit coupled to the storage device. The processing circuit is configured to execute the instructions stored in the storage device. The instructions comprise transmitting a first UECapabilityEnquiry message to a communication device, wherein the first UECapabilityEnquiry message comprises a first indicator indicating the communication device to transmit a first part of a plurality of NR capabilities; and receiving a first UECapabilityInformation message from the communication device, in response to the first UECapabilityEnquiry message, wherein the first UECapabilityInformation message comprises the first part of the plurality of NR capabilities.

A first BS for handling NR capabilities comprises a storage device for storing instructions and a processing circuit coupled to the storage device. The processing circuit is configured to execute the instructions stored in the storage device. The instructions comprise receiving a first information indicating that a first communication device supports NR, from the first communication device, a second BS or a core network (CN) node; transmitting a first UECapabilityEnquiry message to the first communication device, in response to the first information, wherein the first UECapabilityEnquiry message comprises an indicator indicating the first communication device to transmit a first plurality of NR capabilities of the first communication device; and receiving a first UECapabilityInformation message from the first communication device, in response to the first UECapabilityEnquiry message, wherein the first UECapabilityInformation message comprises the first plurality of NR capabilities of the first communication device.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.

### Detailed Description

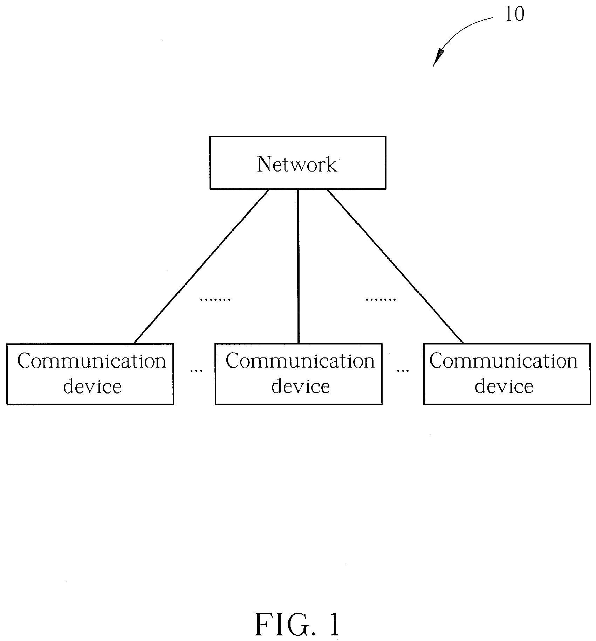

Fig. 1 is a schematic diagram of a wireless communication system 10 according to an example of the present invention. The wireless communication system 10 is briefly composed of a network and a plurality of communication devices. The network and a communication device may communicate with each other via one or more carriers of licensed band(s) and/or unlicensed band(s) . The network and the communication device may communicate with each other via one or multiple cells (e.g., multiple carriers) belonging to one or multiple base stations (BSs).

In Fig. 1, the network and the communication devices are simply utilized for illustrating the structure of the wireless communication system 10. Practically, the network may comprise at least one of a long-term evolution (LTE) network and a new radio (NR) network. The LTE network may comprise at least one of an evolved universal terrestrial radio access network (E-UTRAN) including at least one evolved Node-B (eNB) and an Evolved Packet Core (EPC). The NR network may comprise a fifth generation (5G) radio access network including at least one 5G BS (called gNB or an evolved eNB (eLTE eNB)) and a Next Generation Core (NGC).

A communication device may be a user equipment (UE), a machine type communication (MTC) device, a mobile phone, a laptop, a tablet computer, an electronic book, a portable computer system, a vehicle, or an aircraft. In addition, the network and the communication device can be seen as a transmitter or a receiver according to direction of transmission (i.e., transmission direction), e.g., for an uplink (UL), the communication device is the transmitter and the network is the receiver, and for a downlink (DL), the network is the transmitter and the communication device is the receiver.

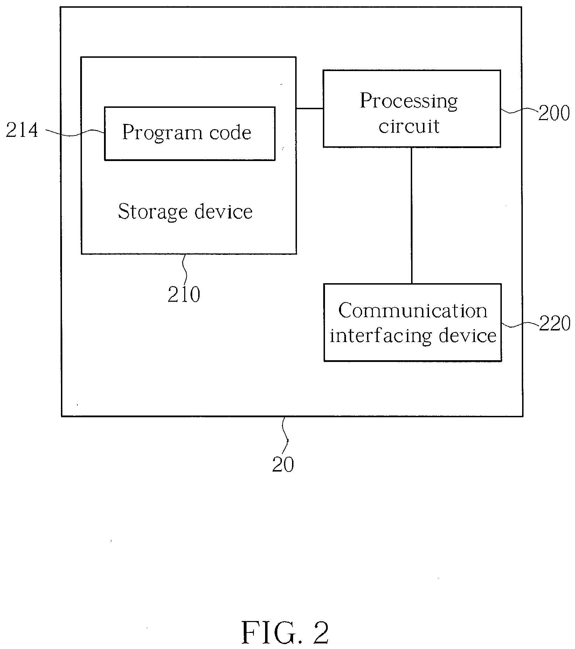

Fig. 2 is a schematic diagram of a communication device 20 according to an example of the present invention. The communication device 20 may be a communication device or the network shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 is preferably a transceiver and is used to transmit and receive signals (e.g., data, messages and/or packets) according to processing results of the at least one processing circuit 200.

In the following embodiments, a UE is used for representing a communication device in Fig. 1, to simplify the illustration of the embodiments.

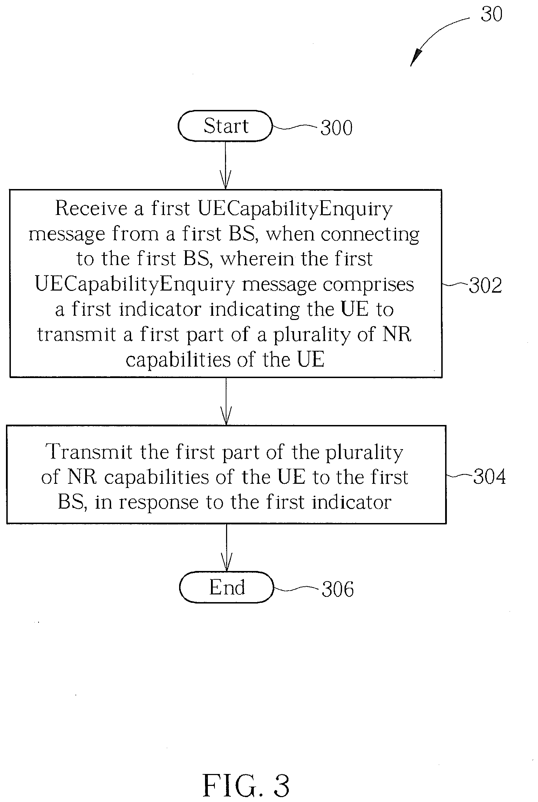

A process 30 as shown in Fig. 3 can be utilized in a UE and includes the following steps:
- Step 300:: Start.
- Step 302:: Receive a first UECapabilityEnquiry message from a first BS, when connecting to the first BS, wherein the first UECapabilityEnquiry message comprises a first indicator indicating the UE to transmit a first part of a plurality of NR capabilities of the UE.
- Step 304:: Transmit the first part of the plurality of NR capabilities of the UE to the first BS, in response to the first indicator.
- Step 306:: End.

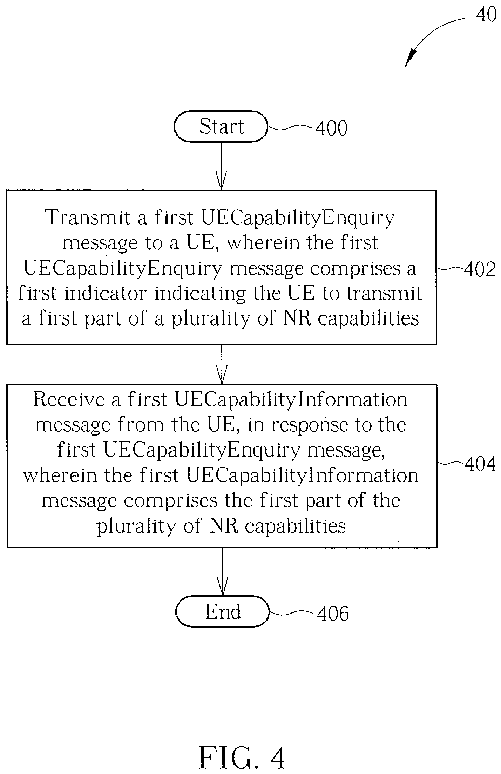

A process 40 as shown in Fig. 4 can be utilized in a first BS (e.g., in the network in Fig. 1) and includes the following steps:
- Step 400:: Start.
- Step 402:: Transmit a first UECapabilityEnquiry message to a UE, wherein the first UECapabilityEnquiry message comprises a first indicator indicating the UE to transmit a first part of a plurality of NR capabilities.
- Step 404:: Receive a first UECapabilityInformation message from the UE, in response to the first UECapabilityEnquiry message, wherein the first UECapabilityInformation message comprises the first part of the plurality of NR capabilities.
- Step 406:: End.

The following examples may be applied to the processes 30 and 40.

In one example, the plurality of NR capabilities comprise a plurality of NR single carrier capabilities (i.e., not supported band combinations) and at least one of a plurality of NR CA capabilities, a plurality of LTE-NR DC capabilities, a plurality of NR only CA capabilities, a plurality of NR only DC capabilities and a plurality of NR-LTE DC capabilities. For example, the plurality of NR single carrier capabilities may include supported NR bands or layer 2 protocol capabilities. The plurality of NR CA capabilities may include supported band combinations for NR only CA. The plurality of NR only DC capabilities may include supported band combinations for NR only DC. The plurality of LTE-NR DC capabilities include supported band combinations for LTE-NR DC. In LTE-NR DC, the UE connects to a LTE BS and a NR BS, and the LTE BS is a MBS and the NR BS is a SBS. The plurality of LTE-NR DC capabilities may include supported combinations for NR-LTE DC. In NR-LTE DC, the UE connects to a NR BS and a LTE BS, and the NR BS is a MBS and the LTE BS is a SBS.

In one example, the first part of the plurality of NR capabilities (hereinafter referred to as the first part) is transmitted by the first BS (e.g., of the LTE network or a NR network) to a second BS of (e.g., the NR network). Thus, the second BS generates a NR handover command for a handover (e.g., inter-radio access technology (inter-RAT) handover) from the first BS to the second BS according to the first part. For example, the first part comprises the NR single carrier capabilities or NR CA capabilities.

In one example, the first part is transmitted by the first BS (e.g., of the LTE network) to a third BS (e.g., of the NR network). Thus, the third BS generates a NR configuration for a LTE-NR DC according to the first part. For example, the first part comprises the LTE-NR DC capabilities.

In one example, the first UECapabilityEnquiry message comprises a second indicator indicating the UE to transmit a second part of the plurality of NR capabilities of the UE (hereinafter referred to as the second part). The UE transmits the second part to the first BS in a first UECapabilityInformation message.

In one example, the UE receives a second UECapabilityEnquiry message from the first BS (e. g. , of the LTE network), when connecting to the first BS, wherein the second UECapabilityEnquiry message comprises a third indicator indicating the UE to transmit a third part of the plurality of NR capabilities of the UE (hereinafter referred to as the third part). The UE transmits the third part of the plurality of NR capabilities to the first BS in a second UECapabilityInformation message, in response to the third indicator.

The first part is different from the second or third part(s). In one example, the first part comprises the NR single carrier capabilities or NR CA capabilities and the second or third part may comprise the LTE-NR DC capabilities. In one example, the first part comprises the NR single carrier capabilities or NR CA capabilities and the second or third part may comprise the NR-LTE DC capabilities. In one example, the second or third part (s) is/are transmitted by the first BS to a fourth BS. Thus, the fourth BS network generates a NR configuration for LTE-NR DC according to the second or third part(s). The first BS may also transmit the first part to the fourth BS in addition to the second or third part (s). Thus, the fourth BS network generates a NR configuration for LTE-NR DC according to the first part and the second or third part(s).

In one example, the first part may comprises only the NR single carrier capabilities. In one example, the first BS determines to request the UE to report the first part. When determining to trigger a handover from the LTE network to the NR network, the first BS transmits the first part to a second BS of the NR network. Thus, the second BS (e.g., of the NR network) generates a NR handover command (e.g., a NR RRC message) for the handover (e.g., inter-RAT handover) from the LTE network to the NR network according to the first part. Thus, the NR handover command neither configures a NR CA configuration to the UE to enable NR CA nor configures a NR DC configuration to the UE to enable NR DC. After the UE hands over to the second BS, the second BS transmits a NR UECapabilityEnquiry message to the UE to request the UE to transmit the NR only CA capability or the NR only DC capability. The UE transmits the plurality of NR only CA capabilities, the plurality of NR only DC capabilities or the plurality of NR-LTE DC capabilities in a NR UECapabilityInformation message to the second BS, in response to the NR UECapabilityEnquiry message. Then, the second BS configures the NR CA according to the plurality of NR only CA capabilities, configures the NR DC according to the plurality of NR only DC capabilities, and configures the NR-LTE DC according to the plurality of NR-LTE DC capabilities.

In one example, the first part may be the LTE-NR DC capabilities. In one example, the first BS transmits the first part of the UE to a third BS (e. g. , of the NR network), when determining to trigger a LTE-NR DC. Thus, the third BS of the NR network generates a NR configuration configuring the UE to communicate with the third BS in the LTE-NR DC according to the first part.

In one example, the first BS transmits the first UECapabilityEnquiry message or the second UECapabilityEnquiry message to the UE, when the first BS receives an information indicating support of NR from the UE, a fifth BS or a core network (CN) node. Otherwise, the first BS may not transmit the first UECapabilityEnquiry message or the second UECapabilityEnquiry message. In one example, the information comprises at least one NR band supported by the UE to indicate support of NR. In one example, the information comprises support of LTE-NR DC (or support of NR-LTE DC or support of NR only operation) to indicate support of NR. The UE transmits the information in a radio resource control (RRC) message to the first BS. The RRC message is a RRCConnectionRequest message, a RRCConnectionSetupComplete message or a third UECapabilityInformation message. The information is comprised in a UE-EUTRA-Capability information element (IE) in the third UECapabilityInformation message. The information may comprise at least one NR band supported by the UE and the support of LTE-NR DC (or support of NR-LTE DC or support of NR only operation) to indicate support of NR. The plurality of NR capabilities may also include the at least one NR band supported by the UE. The first or the second UECapabilityInformation message may comprise the information.

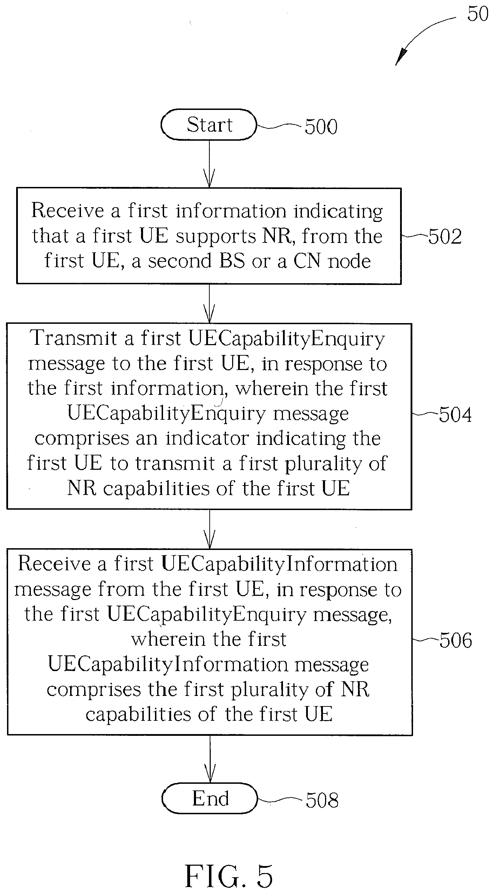

A process 50 as shown in Fig. 5 can be utilized in a first BS (e.g., in the network in Fig. 1) and includes the following steps:
- Step 500:: Start.
- Step 502:: Receive a first information indicating that a first UE supports NR, from the first UE, a second BS or a CN node.
- Step 504:: Transmit a first UECapabilityEnquiry message to the first UE, in response to the first information, wherein the first UECapabilityEnquiry message comprises an indicator indicating the first UE to transmit a first plurality of NR capabilities of the first UE.
- Step 506:: Receive a first UECapabilityInformation message from the first UE, in response to the first UECapabilityEnquiry message, wherein the first UECapabilityInformation message comprises the first plurality of NR capabilities of the first UE.
- Step 508:: End.

The following examples may be applied to the process 50.

In one example, the first BS transmits the first plurality of NR capabilities of the first UE (hereinafter referred to as the first plurality of NR capabilities) to a second BS (e.g., of a NR network), when determining to trigger a handover from the first BS (e.g., a LTE network) to the second BS, wherein the second BS generates a NR handover command for the handover according to the first plurality of NR capabilities.

In one example, the first BS transmits the first plurality of NR capabilities to a third BS (e.g., of the NR network), when determining to configure a LTE-NR DC for the first UE, wherein the third BS generates a NR configuration for the LTE-NR DC according to the first plurality of NR capabilities.

In one example, the first plurality of NR capabilities is all of the NR capabilities of the first UE. In one example, the first plurality of NR capabilities comprise a plurality of NR single carrier capabilities and at least one of a plurality of NR CA capabilities, a plurality of LTE-NR DC capabilities, a plurality of NR only CA capabilities, a plurality of NR only DC capabilities and a plurality of NR-LTE DC capabilities.

In one example, the first indicator is a general indicator indicating the first UE to transmit all of the NR capabilities of the first UE.

In one example, the CN node is a Mobility Management Entity (MME). In one example, the first information includes at least one NR band supported by the first UE. In one example, the first information includes support of LTE-NR DC. The first UE transmits the first information in a RRC message to the first BS. The RRC message is a RRCConnectionRequest message, a RRCConnectionSetupComplete message or a second UECapabilityInformation message. The first information is comprised in a UE-EUTRA-Capability IE in the second UECapabilityInformation message. The first BS may transmit a second UECapabilityEnquiry message to the first UE and the first UE transmits the second UECapabilityInformation message responding the second UECapabilityEnquiry message.

In one example, the first BS receives a second information for a second UE from the second UE, a third BS or the CN node. The second information does not indicate support of NR or indicates not support of NR. The first BS determines not to request the second UE to transmit a second plurality of NR capabilities of the second UE, in response to the second information. That is, the first BS does not transmit the first UECapabilityEnquiry message to the second UE. The second information comprises the UE-EUTRA-Capability of the second UE or the RRC message described above and is transmitted by the second UE. That is, the UE-EUTRA-Capability or the second UECapabilityInformation message does not indicate support of NR or indicates no support of NR. For example, the UE-EUTRA-Capability or the second UECapabilityInformation message does not include the at least one NR band supported by the UE. When the first BS receives the second information, the first BS knows the second UE does not support the NR network and determines not to transmit the first UECapabilityEnquiry message to the second UE.

The following examples may be applied to the processes 30-50 above.

In one example, the CN node (e.g., MME) receives a non-access stratum (NAS) message from a UE via a first BS (e.g., of the LTE network), wherein the NAS message comprises first IE indicating support of NR (e.g., support of LTE-NR DC, support of NR-LTE DC or support of NR only operation). Then, the CN node transmits an interface message to a second BS. The CN node determines to include a second IE indicating that the UE supports NR or the UE is allowed to use NR (i.e., NR is not restricted to the UE), according to the first IE and a subscription of the UE. The UE and the CN node may be as described in the processes 30-40. The first BS may or may not be a BS described in the processes 30-50. The second BS may be the first BS in the processes 30-50. For example, the CN node may transmit the interface message to the first BS in the processes 30-50.

In one example, the second BS may determine to include the first indicator (as described in the processes 30-50) in a first UECapabilityEnquiry message according to the second IE. Then, the second BS transmits the first UECapabilityEnquiry message to the UE. The second BS receives a first UECapabilityInformation message responding the first UECapabilityEnquiry message from the UE, wherein the first UECapabilityInformation message comprises the first part of the plurality of NR capabilities of the UE (as described in the processes 30-40) or the first plurality of NR capabilities (as described in the processes 50). The second BS may determine to include the second indicator (as described in the processes 30-40) in the first, second or third UECapabilityEnquiry message (as described in the processes 30-40), according to the second IE.

Those skilled in the art should readily make combinations, modifications and/or alterations on the abovementioned description and examples. For example, the skilled person easily makes new embodiments of the network based on the embodiments and examples of the UE, and makes new embodiments of the UE based on the embodiments and examples of the network. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program code 214.

To sum up, the present invention provides a method and a communication device for handling NR capabilities. The size of the UECapabilityInformation message can be reduced and the time for transmitting the UECapabilityInformation message is saved. Thus, the problem in the art is solved.

## Claims

1. A communication device for handling new radio (NR) capabilities, comprising:
a storage device; and
a processing circuit, coupled to the storage device, wherein the storage device stores, and the processing circuit is configured to execute instructions of:
receiving a first UECapabilityEnquiry message from a first base station (BS), when connecting to the first BS, wherein the first UECapabilityEnquiry message comprises a first indicator indicating the communication device to transmit a first part of a plurality of NR capabilities of the communication device; and
transmitting the first part of the plurality of NR capabilities of the communication device to the first BS, in response to the first indicator.

2. The communication device of claim 1, wherein the plurality of NR capabilities comprise a plurality of NR single carrier capabilities and at least one of a plurality of NR carrier aggregation (CA) capabilities, a plurality of long-term evolution (LTE)-NR dual connectivity (DC) capabilities, a plurality of NR only CA capabilities, a plurality of NR only DC capabilities and a plurality of NR-LTE DC capabilities.

3. The communication device of claim 1, wherein the first UECapabilityEnquiry message comprises a second indicator indicating the communication device to transmit a second part of the plurality of NR capabilities.

4. The communication device of claim 1, wherein the instructions further comprise:
receiving a second UECapabilityEnquiry message from the first BS, when connecting to the first BS, wherein the second UECapabilityEnquiry message comprises a third indicator indicating the communication device to transmit a third part of the plurality of NR capabilities of the communication device; and
transmitting the third part of the plurality of NR capabilities of the communication device to the first BS, in response to the third indicator.

5. The communication device of claim 1, wherein the first part of the plurality of NR capabilities comprises a plurality of NR single carrier capabilities.

6. The communication device of claim 1, wherein the first part of the plurality of NR capabilities comprises a plurality of LTE-NR DC capabilities.

7. A first base station (BS) for handling new radio (NR) capabilities, comprising:
a storage device; and
a processing circuit, coupled to the storage device, wherein the storage device stores, and the processing circuit is configured to execute instructions of:
transmitting a first UECapabilityEnquiry message to a communication device, wherein the first UECapabilityEnquiry message comprises a first indicator indicating the communication device to transmit a first part of a plurality of NR capabilities; and
receiving a first UECapabilityInformation message from the communication device, in response to the first UECapabilityEnquiry message, wherein the first UECapabilityInformation message comprises the first part of the plurality of NR capabilities.

8. The first BS of claim 7, wherein the plurality of NR capabilities comprise a plurality of NR single carrier capabilities and at least one of a plurality of NR carrier aggregation (CA) capabilities, a plurality of LTE-NR dual connectivity (DC) capabilities, a plurality of NR only CA capabilities, a plurality of NR only DC capabilities and a plurality of NR-LTE DC capabilities.

9. The first BS of claim 7, wherein the instructions further comprise:
transmitting the first part of the plurality of NR capabilities to a second BS, when determining to trigger a handover from the first BS to the second BS, wherein the second BS generates a NR handover command for the handover from the first BS to the second BS according to the first part of the plurality of NR capabilities; or
transmitting the first part of the plurality of NR capabilities to a third BS, when determining to trigger a LTE-NR DC, wherein the third BS generates a NR configuration configuring the communication device to communicate with the third BS in the LTE-NR DC according to the first part of the plurality of NR capabilities.

10. The first BS of claim 7, wherein the first UECapabilityEnquiry message comprises a second indicator indicating the communication device to transmit a second part of the plurality of NR capabilities.

11. The first BS of claim 7, wherein the instructions further comprise:
transmitting a second UECapabilityEnquiry message to the communication device, when the communication device connects to the first BS, wherein the second UECapabilityEnquiry message comprises a third indicator indicating the communication device to transmit a third part of the plurality of NR capabilities of the communication device.

12. A first base station (BS) for handling new radio (NR) capabilities, comprising:
a storage device; and
a processing circuit, coupled to the storage device, wherein the storage device stores, and the processing circuit is configured to execute instructions of:
receiving a first information indicating that a first communication device supports NR, from the first communication device, a second BS or a core network (CN) node;
transmitting a first UECapabilityEnquiry message to the first communication device, in response to the first information, wherein the first UECapabilityEnquiry message comprises an indicator indicating the first communication device to transmit a first plurality of NR capabilities of the first communication device; and
receiving a first UECapabilityInformation message from the first communication device, in response to the first UECapabilityEnquiry message, wherein the first UECapabilityInformation message comprises the first plurality of NR capabilities of the first communication device.

13. The first BS of claim 12, wherein the first plurality of NR capabilities comprise a plurality of NR single carrier capabilities and at least one of a plurality of NR carrier aggregation (CA) capabilities, a plurality of LTE-NR dual connectivity (DC) capabilities, a plurality of NR only CA capabilities, a plurality of NR only DC capabilities and a plurality of NR-LTE DC capabilities.

14. The first BS of claim 12, wherein the instructions further comprise:
transmitting the first plurality of NR capabilities of the first communication device to the second BS, when determining to trigger a handover from the first BS to the second BS, wherein the second BS generates a NR handover command for the handover from the first BS to the second BS according to the first plurality of NR capabilities; or
transmitting the first plurality of NR capabilities of the first communication device to a third BS, when determining to configure a LTE-NR dual connectivity (DC) for the first communication device, wherein the third BS generates a NR configuration for the LTE-NR DC according to the first plurality of NR capabilities.

15. The first BS of claim 12, wherein the instructions further comprise:
receiving a second information indicating that a second communication device does not support NR, from the second communication device; and
determining not to request the second communication device to transmit a second plurality of NR capabilities of the second communication device, in response to the second information.
